# EUROPEAN PATENT APPLICATION

(11) **EP 4 779 738 A1**
(43) Date of publication of application: **22.07.2026**
(21) Application number: 25220989.5
(22) Date of filing: 05.12.2025
(51) Int. Cl.: H01M 10/0562, H01M 10/0585

(54) **SOLID-STATE BATTERY AND METHOD OF MANUFACTURING SOLID-STATE BATTERY**

(30) Priority: 10.12.2024 JP 2024216012
(71) Applicant: Toyota Jidosha Kabushiki Kaisha, Toyota-shi, Aichi-ken 471-8571 (JP)
(72) Inventor: MATSUYAMA, Takuya, Toyota-shi, Aichi-ken 471-8571 (JP)
(74) Representative: Winter, Brandl - Partnerschaft mbB

(57) **Abstract**

A solid-state battery includes: a positive electrode current collector; a positive electrode layer disposed on at least one main face of the positive electrode current collector; and a solid electrolyte layer that is disposed on the positive electrode layer and an insulating layer that is contiguous with the end portion of the solid electrolyte layer, wherein the end portion of the insulating layer opposite from the end portion contiguous with the solid electrolyte layer is in a position overlying the positive electrode layer.

## Description

### Technical Field

This disclosure relates to a solid-state battery and method of manufacturing a solid-state battery.

### Related Art

Secondary batteries have increased in importance in recent years, and advancements are being made in the development of secondary batteries including electrolytes and also solid-state batteries using solid electrolytes. An all-solid-state battery, which is an example of a solid-state battery, is a battery that has a solid electrolyte layer instead of an electrolyte solution, and because it does not use a flammable organic solvent, safety devices can be simplified, resulting in excellent manufacturing costs and productivity.

Japanese Patent Application Laid-open (JP-A) No. 2024-86926 discloses a solid electrolyte sheet used in a solid electrolyte secondary battery, the solid electrolyte sheet including a tabular base portion that includes a solid electrolyte and a tabular reinforcement portion that is superposed on the base portion on the outer side of the base portion. Here, the reinforcement portion is made of an insulating material. In JP-A No. 2024-86926, the rigidity of the area near the peripheral edge portion can be enhanced, so the concern that the area near the peripheral edge portion of the solid electrolyte sheet will sustain damage can be reduced.

Furthermore, JP-A No. 2023-107428 discloses a battery cell having a configuration where a positive electrode layer, a solid electrolyte layer, and a negative electrode layer are laminated in this order, wherein the outer peripheral end of the solid electrolyte layer is located on the outer side of the positive electrode layer and the negative electrode layer, and the portion of the solid electrolyte layer that does not overlie the positive electrode layer and the negative electrode layer contains less of a solid electrolyte than the overlying portion. According to JP-A No. 2023-107428, by reducing the content of the solid electrolyte in the non-overlying portion, manufacturing costs can be kept down, and short circuits can be inhibited.

### SUMMARY

However, there has been the concern that if, for example, pressure is applied in the layered direction to a structure where a positive electrode layer, a solid electrolyte layer, and a negative electrode layer are sequentially laminated on a positive electrode current collector, the end portion of the solid electrolyte layer will end up sustaining damage. Thus, it is an object of an embodiment of this disclosure to provide a solid-state battery that has a structure where a positive electrode layer and a solid electrolyte layer are sequentially laminated on a positive electrode current collector and can prevent damage to the solid electrolyte layer even if pressure is applied in the layered direction and a method of manufacturing a solid-state battery.

This disclosure, which achieves the above object, includes the following aspects.
<1> A solid-state battery, comprising: a positive electrode current collector; a positive electrode layer disposed on at least one main face of the positive electrode current collector; and a solid electrolyte layer that is disposed on the positive electrode layer and an insulating layer that is contiguous with an end portion of the solid electrolyte layer, wherein an end portion of the insulating layer at an opposite side from the end portion that is contiguous with the solid electrolyte layer is in a position overlying the positive electrode layer.
<2> The solid-state battery of <1>, further comprising a negative electrode layer disposed on the solid electrolyte layer and the insulating layer, wherein an end portion of the negative electrode layer is in a position overlying the insulating layer.
<3> The solid-state battery of <1> or <2>, wherein the positive electrode current collector comprises a positive electrode current collector tab-side end portion connected to a positive electrode current collector tab, and the insulating layer and the solid electrolyte layer are disposed on the positive electrode layer in this order from the positive electrode current collector tab-side end portion.
<4> The solid-state battery of any one of <1> to <3>, comprising an adhesive layer between the positive electrode current collector and the positive electrode layer.
<5> The solid-state battery of <4>, wherein the adhesive layer is conductive.
<6> The solid-state battery of <4>, wherein the adhesive layer has a thickness of 0.5 µm to 1.5 µm.
<7> The solid-state battery of any one of <1> to <6>, wherein an angle of inclination of an end face of the solid electrolyte layer that contiguous with the insulating layer, and an angle of inclination of an end face of the insulating layer at an opposite side from an end face that is contiguous with the solid electrolyte layer, in a cross-sectional view along a layering direction of the positive electrode current collector, the positive electrode layer, and the solid electrolyte layer and the insulating layer, are in a range of ±10° relative to the layering direction.
<8> A method of manufacturing a solid-state battery, the method comprising: forming a positive electrode layer on at least one main face of a positive electrode current collector; and forming, on the positive electrode layer, a solid electrolyte layer and an insulating layer that is contiguous with an end portion of the solid electrolyte layer, wherein an end portion of the insulating layer at an opposite side from the end portion that is contiguous with the solid electrolyte layer is disposed in a position overlying the positive electrode layer.
<9> The method of manufacturing a solid-state battery of <8>, further comprising forming a negative electrode layer such that an end portion of the negative electrode layer overlies the insulating layer.
<10> The method of manufacturing a solid-state battery of <8> or <9>, wherein, in the forming the positive electrode layer, an adhesive layer is formed on the at least one main face of the positive electrode current collector, and the positive electrode layer, which has been formed on a transfer member, is transferred to the adhesive layer.
<11> The method of manufacturing a solid-state battery of <10>, wherein the adhesive layer is conductive.
<12> The method of manufacturing a solid-state battery of <10>, wherein the adhesive layer has a thickness of 0.5 µm to 1.5 µm.
<13> The method of manufacturing a solid-state battery of <10>, wherein a positive electrode slurry comprising a positive electrode active material is coated on the transfer member, and thereafter, an inclined face of a peripheral edge portion of the coated positive electrode slurry is cut off.
<14> The method of manufacturing a solid-state battery of any one of <8> to <13>, wherein an angle of inclination of an end face of the solid electrolyte layer that is contiguous with the insulating layer, and an angle of inclination of an end face of the insulating layer at an opposite side from an end face that is contiguous with the solid electrolyte layer, in a cross-sectional view along a layering direction of the positive electrode current collector, the positive electrode layer, and the solid electrolyte layer and the insulating layer, are in a range of ±10° relative to the layering direction.

According to an embodiment of this disclosure, even if pressure is applied in the layered direction to a structure where a positive electrode layer and a solid electrolyte layer are sequentially laminated on a positive electrode current collector, damage to the solid electrolyte layer can be prevented.

### BRIEF DESCRIPTION OF THE DRAWINGS

FIG. 1 is a cross-sectional view of main parts of a solid-state battery described as an embodiment of this disclosure;
FIG. 2 is a schematic plan view showing an example of a position where the surface of the solid-state battery in a plan view viewed from its upper face is cut by a plane parallel to a layering direction;
FIG. 3A and FIG. 3B are cross-sectional views of main parts showing steps for forming a positive electrode layer on a transfer member;
FIG. 4A to FIG. 4D are cross-sectional views of main parts showing steps for forming a solid electrolyte layer and an insulating layer on a transfer member;
FIG. 5 is a cross-sectional view of main parts showing angles of inclination of end faces of the solid electrolyte layer and the insulating layer formed on the transfer member; and
FIG. 6 is a cross-sectional view of main parts of a solid-state battery described as another embodiment of this disclosure.

### DETAILED DESCRIPTION

In this disclosure, a numerical range described using "to" means a range that includes the numerical values appearing before and after the "to" as a minimum value and a maximum value, respectively.

In numerical ranges that are progressively described in this disclosure, the upper limit value or the lower limit value in a given numerical range may be replaced with the upper limit value or the lower limit value of another progressively described numerical range. In numerical ranges that are described in this disclosure, the upper limit value or the lower limit value described for a given numerical range may be replaced with values described in the Examples.

In this disclosure, the term "step" includes not only an independent step but also a step that cannot be clearly distinguished from another step as long as the intended object of that step is achieved.

In this disclosure, a combination of two or more preferred aspects is a more preferred aspect.

In this disclosure, when there are multiple types of materials applicable to each component, the amount of each component means the total amount of the multiple types of materials unless otherwise specified.

In this disclosure, when an embodiment is described with reference to drawings, the configuration of the embodiment is not limited to the configuration shown in the drawings. Furthermore, the sizes of members in the drawings are conceptual, and relative relationships between the sizes of the members is not limited to this.

### <Solid-state Battery>

A solid-state battery of this disclosure will now be described below. The solid-state battery of this disclosure includes: a positive electrode current collector; a positive electrode layer disposed on at least one main face of the positive electrode current collector; and a solid electrolyte layer that is disposed on the positive electrode layer and an insulating layer that is contiguous with an end portion of the solid electrolyte layer, wherein an end portion of the insulating layer at an opposite side from the end portion that is contiguous with the solid electrolyte layer is in a position overlying the positive electrode layer. In the solid-state battery of this disclosure, even if pressure is applied in the layered direction of the positive electrode current collector, the positive electrode layer, and the solid electrolyte layer (e.g., even if subjected to an external force in the layered direction in a confined state in which the current collector and the electrode layer are pressed tightly together in the layered direction), the insulating layer can protect the solid electrolyte layer and prevent damage to the solid electrolyte layer. If the solid electrolyte layer were to sustain damage, it is conceivable that battery performance would deteriorate due to the problem of cracks further progressing from the damaged portion and the problem of lithium precipitating due to nonuniform reactions in the damaged portion. According to the solid-state battery of this disclosure, the occurrence of these problems can be inhibited, and excellent battery performance can be maintained.

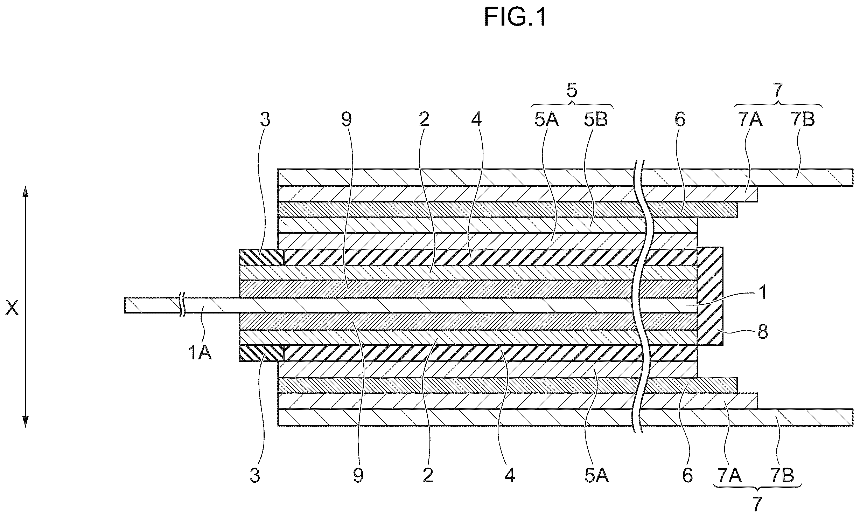

As shown in FIG. 1, a solid-state battery described as an embodiment of this disclosure includes a positive electrode current collector 1, positive electrode layers 2 disposed on both main faces of the positive electrode current collector 1, insulating layers 3 and solid electrolyte layers 4 disposed on the positive electrode layers 2, negative electrode layers 5 disposed on the solid electrolyte layers 4, carbon coating layers 6 disposed on the negative electrode layers 5, and negative electrode current collectors 7 disposed on the carbon coating layers 6.

Furthermore, in the solid-state battery shown in FIG. 1, the positive electrode current collector 1 has a positive electrode current collector tab-side end portion 1A connected to a positive electrode current collector tab. The insulating layers 3 and the solid electrolyte layers 4 on the positive electrode layer 2 are disposed in this order from the positive electrode current collector tab-side end portion 1A. Moreover, the solid-state battery shown in FIG. 1 includes an end portion insulating portion 8 on the end portion of the positive electrode current collector 1 opposite from the positive electrode current collector tab-side end portion 1A. It will be noted that in this disclosure "layered direction" means the direction in which the positive electrode layers 2, the solid electrolyte layers 4, and so on are laminated from the positive electrode current collector 1 as indicated by arrow X in FIG. 1.

In the solid-state battery shown in FIG. 1, the negative electrode layers 5 are each divided into two layers, a first negative electrode layer 5A positioned on the solid electrolyte layer 4 and a second negative electrode layer 5B positioned on the first negative electrode layer 5A. However, the negative electrode layers 5 may also be single layers or have more than two divisional layers. Furthermore, in the solid-state battery shown in FIG. 1, the negative electrode current collectors 7 are each divided into two layers, a first negative electrode current collector 7A positioned on the negative electrode layer 5 and a second negative electrode current collector 7B positioned on the first negative electrode current collector 7A. However, the negative electrode current collectors 7 may also be single layers or have more than two divisional layers.

In the solid-state battery shown in FIG. 1, because the insulating layers 3 are disposed on one end portion of each of the solid electrolyte layers 4, those end portions can be protected by the insulating layers 3. Because of this, in the solid-state battery shown in FIG. 1, even if pressure is applied in the layered direction of the positive electrode current collector 1, the positive electrode layers 2, and the solid electrolyte layers 4 (the direction of X in FIG. 1), damage to the solid electrolyte layers 4, and particularly damage to the end portions of the solid electrolyte layers 4, can be prevented.

Furthermore, in the solid-state battery of this disclosure, the end portions of the negative electrode layers 5 disposed on the solid electrolyte layers 4 and the insulating layers 3 are in positions overlying the insulating layers 3. That is, the end portions of the negative electrode layers 5 on the positive electrode current collector tab-side end portion 1A side are in positions overlying the insulating layers 3 in a cross-sectional view along the layered direction X of the positive electrode current collector 1, the positive electrode layers 2, and the insulating layers 3 and the solid electrolyte layers 4. Because of this, in the solid-state battery of this disclosure, the end portions of the solid electrolyte layers 4 can be protected by the negative electrode layers 5, and damage to the end portions of the solid electrolyte layers 4 can also be prevented even if pressure is applied in the direction of X in FIG. 1. Moreover, in the solid-state battery shown in FIG. 1, particularly the solid electrolyte layers 4 and the insulating layers 3 are formed flush with each other on the main faces of the positive electrode layers 2. That is, the solid electrolyte layers 4 and the insulating layers 3 are in contact with each other at one end face, and the main faces of the solid electrolyte layers 4 and the main faces of the insulating layers 3 form identical planes. Because of this, in the solid-state battery of this disclosure, the end portions of the solid electrolyte layers 4 can be more reliably protected by the negative electrode layers 5, and damage to the end portions of the solid electrolyte layers 4 can also be effectively prevented even if pressure is applied in the direction of X in FIG. 1.

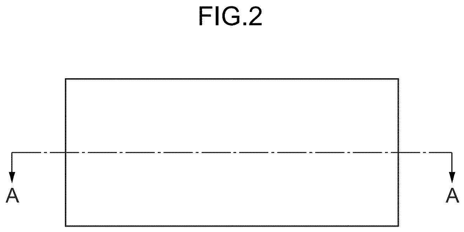

It will be noted that the "cross-sectional view along the layered direction X" means when viewing a cross-section obtained by cutting the solid-state battery along the layered direction X of the battery laminate structure and particularly means when viewing a cross-section passing through the positive electrode current collector tab-side end portion 1A and the end portion opposite from the positive electrode current collector tab-side end portion 1A. More specifically, when the solid-state battery shown in FIG. 1 is a prismatic battery, the "cross-sectional view along the layered direction X" can, as shown in FIG. 2, be a cross-sectional view of a cross-section taken along line A-A, which substantially bisects the rectangle in its widthwise direction as viewed in a plan view from its upper face. It will be noted that in FIG. 2, line A-A, which substantially bisects the rectangle in its widthwise direction, passes through the positive electrode current collector tab-side end portion 1A and the end portion insulating portion 8.

Furthermore, the solid-state battery shown in FIG. 1 includes adhesive layers 9 between the positive electrode current collector 1 and the positive electrode layers 2. In this case, the adhesive layers 9 are formed on both main faces of the positive electrode current collector 1, and although details are described further below, the positive electrode layers 2 can be disposed by a method where the positive electrode layers 2 which have been formed on transfer members are transferred to the adhesive layers 9. In the solid-state battery shown in FIG. 1, the adhesive layers 9 are configured as single layers so as to cover the entireties of both main faces of the positive electrode current collector 1, but they may also be formed like islands on parts of both main faces of the positive electrode current collector 1. That is, the adhesive layers 9 may be layers covering the entireties of both main faces of the positive electrode current collector 1 or may be like islands as long as they have the function of adhering the positive electrode layers 2 to both main faces of the positive electrode current collector 1.

In particular, the adhesive layers 9 are preferably conductive. When the adhesive layers 9 are conductive, electrical bonding between the positive electrode current collector 1 and the positive electrode layers 2 can be ensured even when the adhesive layers 9 are laminated as single layers on the positive electrode current collector 1.

Moreover, the thickness of the adhesive layers 9 is not particularly limited but is preferably 0.5 µm to 1.5 µm, more preferably 0.5 µm to 1.0 µm, and even more preferably 0.8 µm to 1.0 µm. By setting the thickness of the adhesive layers 9 in this range, even if the adhesive layers 9 are not conductive, electrical bonding between the positive electrode current collector 1 and the positive electrode layers 2 can be ensured because the positive electrode active material and the like included in the positive electrode layers 2 penetrates the adhesive layers 9.

Moreover, in the solid-state battery shown in FIG. 1, although details will be described further below, when the solid electrolyte layers 4 and the insulating layers 3 are prepared by coating slurries, inclined faces caused by coating run are formed, and these inclined faces are preferably cut off. Because of this, the regions that can be utilized as the solid electrolyte layers 4 can be designed wide, and battery performance can be improved. Furthermore, in the solid-state battery shown in FIG. 1, by cutting off the inclined faces of the insulating layers 3 caused by coating run, the mechanical strength of the end portions of the insulating layers 3 on the positive electrode current collector tab-side end portion 1A side can be improved. Specifically, an angle of inclination α of the end faces of the solid electrolyte layers 4 contiguous with the insulating layers 3 and an angle of inclination β of the end faces of the insulating layers 3 opposite from the end faces contiguous with the solid electrolyte layers 4 are preferably in the range of ±10°, and more preferably in the range of ±5°, relative to the layered direction X in the cross-sectional view. By setting the angle of inclination α and the angle of inclination β in this range, the regions that can be utilized as the solid electrolyte layers 4 can be designed wide, and battery performance can be improved.

In the solid-state battery configured as described above, the end portions of the insulating layers 3 disposed on the positive electrode layers 2 opposite from the end portions contiguous with the solid electrolyte layers 4 are in positions overlying the positive electrode layers 2. Because of this, even if pressure is applied in the layered direction X to the solid-state battery, the insulating layers 3 can protect the solid electrolyte layers 4 and prevent damage to the solid electrolyte layers 4 and particularly damage to the areas near the end faces of the solid electrolyte layers 4. If the solid electrolyte layers 4 were to sustain damage, it is conceivable that battery performance would deteriorate due to the problem of cracks further progressing from the damaged portion and the problem of lithium precipitating due to nonuniform reactions in the damaged portion. According to the solid-state battery shown in FIG. 1, the occurrence of these problems can be inhibited, and excellent battery performance can be maintained.

Here, "pressure is applied in the layered direction X" means pressure is applied in a direction sandwiching the positive electrode current collector 1, the positive electrode layers 2, the insulating layers 3 and the solid electrolyte layers 4, the negative electrode layers 5, and the negative electrode current collectors 7. Although the drawings do not show this, the solid-state battery may further include confining members that confine the positive electrode layers 2, the insulating layers 3, the solid electrolyte layers 4, the negative electrode layers 5, and the negative electrode current collectors 7 in the layered direction. The confining members apply confining pressure to the electrode laminate in its thickness direction. For example, the confining pressure may be equal to or greater than 0.1 MPa, equal to or greater than 1 MPa, or equal to or greater than 5 MPa for example and equal to or less than 100 MPa, equal to or less than 50 MPa, or equal to or less than 20 MPa for example. Even when the above pressure is applied by the confining members, in the solid-state battery of this disclosure, damage to the solid electrolyte layers 4, and particularly damage to the areas near the end faces of the solid electrolyte layers 4, can be prevented.

Furthermore, in the solid-state battery shown in FIG. 1, a positive electrode including the positive electrode current collector 1 and the positive electrode layers 2 is located near the center of the electrode laminate in the layered direction X, and negative electrodes including the negative electrode current collectors 7 and the negative electrode layers 5 are located on outer layer sides of the electrode laminate in the layered direction X. In the solid-state battery configured in this way, the positive electrode layers 2 can be densified by first disposing the positive electrode layers 2 on the main faces of the positive electrode current collector 1 and then compressing them in the layered direction. Thereafter, the insulating layers 3 and solid electrolyte layers 4 and the negative electrode layers 5 are sequentially disposed on the positive electrode layers 2. That is, when manufacturing the solid-state battery, it suffices for the negative electrode layers 5 to be disposed after the positive electrode layers 2 have been densified, so a large pressure can be kept from being applied in the layered direction X to the negative electrode layers 5.

In particular, in the solid-state battery the negative electrode layers 5 use a material that occludes lithium ions, such as porous silicon or a carbon material, as a negative electrode active material. If a large pressure were to be applied in the layered direction X to the negative electrode layers 5, voids in the negative electrode active material may be crushed or the negative electrode active material may be crushed, which may reduce the function of occluding lithium ions. In the solid-state battery of this disclosure, a large pressure can be kept from being applied in the layered direction X to the negative electrode layers 5, so a reduction in the lithium-ion occluding function of the negative electrode active material can be prevented.

### <Elements of Solid-state Battery>

### (Positive Electrode Current Collector)

For the positive electrode current collector, any of those commonly used as positive electrode current collectors for batteries can be employed. Furthermore, the positive electrode current collector may be a foil, plate, mesh, punched metal, or foam, for example. The positive electrode current collector may be configured by a metal foil or a metal mesh. In particular, metal foil has excellent handling properties. The positive electrode current collector may comprise a plurality of foils. Examples of the metal configuring the positive electrode current collector include Cu, Ni, Cr, Au, Pt, Ag, Al, Fe, Ti, Zn, Co, and stainless steel. In particular, the positive electrode current collector may include Al from, for example, the standpoint of ensuring oxidation resistance. The positive electrode current collector may have some kind of coating layer on its surface for the purpose of, for example, adjusting resistance. Furthermore, the positive electrode current collector may comprise a metal foil or substrate on which the above metal is plated or vapor-deposited. It will be noted that when laminating the positive electrode layers and so forth on the positive electrode current collector such as shown in FIG. 1, an Al foil, such as an Al foil having a thickness of 10 µm for example, can be used as the positive electrode current collector.

### (Positive Electrode Layers)

The positive electrode layers include at least a positive electrode active material and may also optionally include an electrolyte, a conductive additive, and a binder, for example. The positive electrode layers may also include various types of additives in addition to these. As the positive electrode active material, materials known as positive electrode active materials for secondary batteries can be used. The positive electrode active material may be at least one type selected from various types of lithium-containing compounds, elemental sulfur, and sulfur compounds. The lithium-containing compounds serving as the positive electrode active material may be various types of lithium-containing oxides such as lithium cobaltate, lithium nickelate, Li_{1±α}Ni_{1/3}Co_{1/3}Mn_{1/3}O_{2±δ}, lithium manganate, spinel-based lithium compounds (different element-substituted Li-Mn spinel having a composition represented by Li₁₊ₓMn_{2-x-y}M_{y}O₄ (M is one type or more selected from Al, Mg, Co, Fe, Ni, and Zn)), lithium titanate, and lithium metal phosphates (e.g., LiMPO₄, where M is one type or more selected from Fe, Mn, Co, and Ni). In particular, when the positive electrode active material includes a lithium-containing oxide including at least Li, at least one of Ni, Co, and Mn, and O as constituent elements, even greater effects can be expected. Just one type of positive electrode active material may be used alone, or a combination of two or more types may be used.

The shape of the positive electrode active material may be any shape that is common for positive electrode active materials for batteries. The positive electrode active material may be particulate, for example. The positive electrode active material may be solid, hollow, have voids, or be porous. The positive electrode active material may be primary particles or may be secondary particles in which a plurality of primary particles are agglomerated. Furthermore, a protective layer containing an ion-conducting oxide may be formed on the surface of the positive electrode active material. Because of this, reactions between the positive electrode active material and sulfides (e.g., sulfide solid electrolytes) are more easily inhibited. Examples of ion-conducting oxides include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, and Li₂WO₄.

### (Solid Electrolyte)

The solid electrolyte included in the solid electrolyte layers preferably includes at least one solid electrolyte type selected from the solid electrolyte group comprising sulfide solid electrolytes, oxide solid electrolytes, and halide solid electrolytes.

The sulfide solid electrolyte preferably contains sulfur (S) as the main component of an anionic element and preferably further contains, in addition to S, the element Li, an element A, and the element S for example. The element A is at least one type selected from the group comprising P, As, Sb, Si, Ge, Sn, B, Al, Ga, and In. The sulfide solid electrolyte may further contain at least one of O and a halogen element. Examples of the halogen element (X) include F, Cl, Br, and I. The composition of the sulfide solid electrolyte is not particularly limited, and examples thereof include xLi₂S·(100-x)P₂S₅ (70 ≤ x ≤ 80) and yLiI·zLiBr·(100-y-z)(xLi₂S·(1-x)P₂S₅) (0.7 ≤ x ≤ 0.8, 0 ≤ y ≤ 30, and 0 ≤ z ≤ 30).

The sulfur solid electrolyte may have the composition given by general formula (1) below.

Li₄₋ₓGe₁₋ₓPₓS₄ (0 < x < 1) ··· Formula (1)

In formula (1), at least part of Ge may be substituted with at least one selected from the group comprising Sb, Si, Sn, B, Al, Ga, In, Ti, Zr, V, and Nb. Furthermore, at least part of P may be substituted with at least one selected from the group comprising Sb, Si, Sn, B, Al, Ga, In, Ti, Zr, V, and Nb. Part of Li may be substituted with at least one selected from the group comprising Na, K, Mg, Ca, and Zn. Part of S may be substituted with a halogen. The halogen is at least one of F, Cl, Br, and I.

The oxide solid electrolyte preferably contains oxygen (O) as the main component of an anionic element and may, for example, contain Li, an element Q (Q represents at least one type of Nb, B, Al, Si, P, Ti, Zr, Mo, W, and S), and O. Examples of the oxide solid electrolyte include garnet-type solid electrolytes, perovskite-type solid electrolytes, NASICON-type solid electrolytes, Li-P-O-based solid electrolytes, and Li-B-O-based solid electrolytes. Examples of garnet-type solid electrolytes include Li₇La₃Zr₂O₁₂, Li₇₋ₓLa₃(Zr₂₋ₓNbₓ)O₁₂ (0 ≤ x ≤ 2), and Li₅La₃Nb₂O₁₂. Examples of perovskite-type solid electrolytes include (Li, La)TiO₃, (Li, La)NbO₃, and (Li, Sr)(Ta, Zr)O₃. Examples of NASICON-type solid electrolytes include Li(Al, Ti)(PO₄)₃ and Li(Al, Ga)(PO₄)₃. Examples of Li-P-O-based solid electrolytes include Li₃PO₄ and LIPON (a compound in which part of O in Li₃PO₄ is substituted with N), and examples of Li-B-O-based solid electrolytes include Li₃BO₃ and compounds in which part of O in Li₃BO₃ is substituted with C.

As the halide solid electrolyte, a solid electrolyte including Li, M, and X (M represents at least one of Ti, Al, and Y, and X represents F, Cl, or Br) is preferred.

Specifically, Li_{6-3z}Y_{z}X₆ (X represents Cl or Br, and z satisfies 0 < z < 2) and Li_{6-(4-x)b}(Ti₁₋ₓAlₓ)_{b}F₆ (0 < x < 1 and 0 < b ≤ 1.5) are preferable. Among Li_{6-3z}Y_{z}X₆, in terms of having excellent lithium-ion conductivity, Li₃YX₆ (X represents Cl or Br) is more preferable and Li₃YCl₆ is even more preferable. Furthermore, Li_{6-(4-x)b}(Ti₁₋ₓAlₓ)_{b}F₆ (0 < x < 1 and 0 < b ≤ 1.5) is preferably included together with a solid electrolyte such as a sulfide solid electrolyte from standpoints such as inhibiting oxidative decomposition of the sulfide solid electrolyte for example.

### (Solid Electrolyte Layers)

Examples of the solid electrolyte layers include electrolyte layers used in semi-solid-state batteries and all-solid-state batteries. The thickness of the solid electrolyte layers is not particularly limited and can be selected from the range of 1 µm to 30 µm for example. The type of solid electrolyte included in the solid electrolyte layers is not particularly limited. For example, the solid electrolyte may be selected from solid electrolytes that may be included in the electrode layers described above. The solid electrolyte layers may be single layers or have a multilayer structure of two or more layers.

When the solid-state battery of this disclosure includes a solid electrolyte, it may include, together with the solid electrolyte, less than 10% by mass of an electrolyte solution relative to the total amount of the electrolyte. When the battery of this disclosure includes a solid electrolyte, the solid electrolyte may be a composite solid electrolyte including an inorganic solid electrolyte and a polymer electrolyte. When the solid-state battery of this disclosure includes an electrolyte solution as the electrolyte, the type of the electrolyte solution is not particularly limited, and known electrolyte solutions can be used. Specific examples of the electrolyte solution include a liquid in which a lithium salt such as LiPF₆ or LiFSi is dissolved in an organic solvent.

### (Negative Electrode Layers)

The negative electrode layers include at least a negative electrode active material and may also optionally include an electrolyte, a conductive additive, and a binder, for example. The negative electrode layers may also include various types of additives in addition to these. Examples of negative electrode active materials include carbon materials, active materials including the element Si, metallic lithium, lithium-containing alloys, metals or alloys capable of being alloyed with lithium, oxides, and transition metal nitrides. Examples of carbon materials include graphite materials, amorphous carbon materials, carbon black, and activated carbon. Examples of graphite materials include natural graphite and artificial graphite. Examples of amorphous carbon materials include hard carbon, soft carbon, coke, mesocarbon microbeads (MCMB), and mesophase pitch carbon fiber (MCF). The graphite material may be coated with a metal or amorphous carbon. Examples of active materials including the element Si include elemental silicon, silicon alloys (e.g., alloys of Si and one or more metals selected from the group comprising Sn, Ti, Fe, Ni, Cu, Co, and Al), porous silicon, silicon clathrate compounds, and silicon oxides.

### (Negative Electrode Current Collectors)

For the negative electrode current collectors, any of those commonly used as negative electrode current collectors for batteries can be employed. Furthermore, the negative electrode current collectors may be a foil, plate, mesh, punched metal, or foam, for example. The negative electrode current collectors may be a metal foil or a metal mesh, or may be a carbon sheet. The negative electrode current collectors may comprise a plurality of foils or sheets. Examples of metals configuring the negative electrode current collectors include Cu, Ni, Cr, Au, Pt, Ag, Al, Fe, Ti, Zn, Co, and stainless steel. In particular, from the standpoint of ensuring reduction resistance and the standpoint of being difficult to alloy with lithium, the negative electrode current collectors may include at least one type of metal selected from Cu, Ni, and stainless steel.

The negative electrode current collectors may have some kind of coating layer on their surfaces for the purpose of, for example, adjusting resistance. Furthermore, the negative electrode current collectors may comprise a metal foil or substrate on which the above metal is plated or vapor-deposited. Furthermore, when the negative electrode current collectors comprise a plurality of metal foils, they may include some kind of layer between the plural metal foils. The thickness of the negative electrode current collectors is not particularly limited. For example, the thickness may be 0.1 µm or more or 1 µm or more and 1 mm or less or 100 µm or less. For example, in the solid-state battery such as shown in FIG. 1, Al foils (corresponding to the second negative electrode current collectors 7B in FIG. 1) having Ni-plated layers (corresponding to the first negative electrode current collectors 7A in FIG. 1) can be used as the negative electrode current collectors. More specifically, for example, an Al foil having a thickness of 10 µm on which a Ni-plated layer having a thickness of 1 µm is laminated can be used as each of the negative electrode current collectors.

### (Carbon Coating Layers)

The carbon coating layers function as adhesive layers for bonding the negative electrode current collectors to the negative electrode layers and also function as conductive layers for ensuring electrical continuity between the negative electrode current collectors and the negative electrode layers. Examples of the carbon material included in the carbon coating layers include graphite materials, amorphous carbon materials, carbon black, and activated carbon. Examples of graphite materials include natural graphite and artificial graphite. Examples of amorphous carbon materials can include hard carbon, soft carbon, coke, mesocarbon microbeads (MCMB), and mesophase pitch carbon fiber (MCF).

### (Casing)

The solid-state battery of this disclosure may further include a casing. The casing houses at least the electrode laminate. Examples of the casing include a laminate type casing and a case type casing. The laminate type casing may be formed from a laminate (laminate film) having a metal layer including a metal such as aluminum and a heat seal layer including a resin that melts upon being heated.

### (Confining Members)

The solid-state battery of this disclosure may further include confining members. The confining members apply confining pressure to the electrode laminate in its thickness direction. The confining pressure applied in the thickness direction of the electrode laminate may, for example, be 0.1 MPa or more, 1 MPa or more, or 5 MPa or more. The confining pressure applied in the thickness direction of the electrode laminate may, for example, be 100 MPa or less, 50 MPa or less, or 20 MPa or less.

### <Solid-state Battery Manufacturing Method>

The solid-state battery manufacturing method of this disclosure includes: a step of forming a positive electrode layer on at least one main face of a positive electrode current collector; and a step of forming, on the positive electrode layer, a solid electrolyte layer and an insulating layer that is contiguous with the end portion of the solid electrolyte layer, wherein the end portion of the insulating layer opposite from the end portion contiguous with the solid electrolyte layer is set in a position overlying the positive electrode layer. According to the solid-state battery manufacturing method of this disclosure, even if pressure is applied in the layered direction of the positive electrode current collector, the positive electrode layer, and the solid electrolyte layer, the insulating layer can protect the solid electrolyte layer and can prevent damage to the solid electrolyte layer.

Furthermore, the solid-state battery manufacturing method of this disclosure further includes a step of forming a negative electrode layer such that its end portion overlies the insulating layer. In the solid-state battery manufacturing method of this disclosure, the negative electrode layer is formed such that its end portion overlies the insulating layer in a cross-sectional view along the layered direction of the positive electrode current collector, the positive electrode layer, and the insulating layer and the solid electrolyte layer.

Regarding the solid-state battery manufacturing method of this disclosure, taking the solid-state battery shown in FIG. 1 as an example, first the positive electrode layers 2 are formed on both main faces of the positive electrode current collector 1. Thereafter, the insulating layers 3, whose end portions come to be in positions overlying the positive electrode layers 2, and the solid electrolyte layers 4 are formed on the positive electrode layers 2. Then, the negative electrode layers 5, the carbon coating layers 6, and the negative electrode current collectors 7 are sequentially formed on the solid electrolyte layers 4, whereby the solid-state battery shown in FIG. 1 can be manufactured.

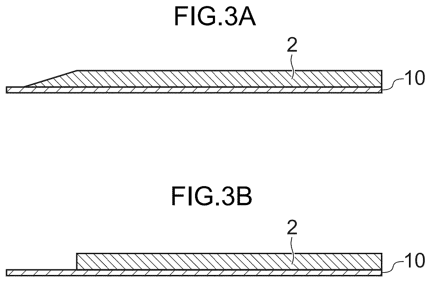

Although the solid-state battery manufacturing method of this disclosure is not particularly limited, as shown in FIG. 3A and FIG. 3B each of the positive electrode layers 2 can be disposed by a method where the positive electrode layer 2 is formed on a transfer member 10 and then the positive electrode layer 2 is transferred to the adhesive layer 9 formed on the positive electrode current collector 1. Specifically, first, as shown in FIG. 3A, a positive electrode slurry including a positive electrode active material is coated on one main face of the transfer member 10 to form the positive electrode layer 2. At this time, the peripheral edge portion of the positive electrode layer 2 becomes an inclined face due to coating run of the positive electrode slurry coated on the one main face of the transfer member 10. Thereafter, although the drawings do not show this, the positive electrode layer 2 formed on the main face of the transfer member 10 is preferably densified by compressing it so as to sandwich the transfer member 10. Then, as shown in FIG. 3B, the inclined face of the positive electrode layer 2 caused by coating run is cut off. In the way described above, the positive electrode layer 2 can be formed on the one main face of the transfer member 10.

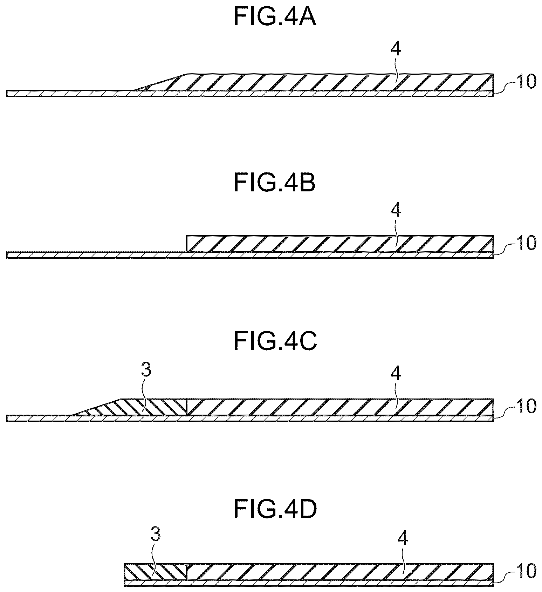

Furthermore, although the solid-state battery manufacturing method of this disclosure is not particularly limited, as shown in FIG. 4A to FIG. 4D each of the insulating layers 3 and the solid electrolyte layers 4 can be disposed by a method where the insulating layer 3 and the solid electrolyte layer 4 are formed on the transfer member 10 and then the insulating layer 3 and the solid electrolyte layer 4 are transferred onto the positive electrode layer 2. Specifically, first as shown in FIG. 4A, a solid electrolyte slurry including a solid electrolyte is coated on one main face of the transfer member 10 to form the solid electrolyte layer 4. At this time, the peripheral edge portion of the solid electrolyte layer 4 becomes an inclined face due to coating run of the solid electrolyte slurry coated on the one main face of the transfer member 10. Then, as shown in FIG. 4B, the inclined face of the solid electrolyte layer 4 caused by coating run is cut off. Next, as shown in FIG. 4C, an insulating slurry including an insulating material is applied so as to be in contact with the end face of the solid electrolyte layer 4. At this time, the peripheral edge portion of the insulating layer 3 becomes an inclined face due to coating run of the insulating slurry. Thereafter, as shown in FIG. 4D, the inclined face of the insulating layer 3 caused by coating run is cut off. Thereafter, although the drawings do not show this, the solid electrolyte layer 4 formed on the main face of the transfer member 10 is preferably densified by compressing it so as to sandwich the transfer member 10. In the way described above, the insulating layer 3 and the solid electrolyte layer 4 can be formed on the one main face of the transfer member 10.

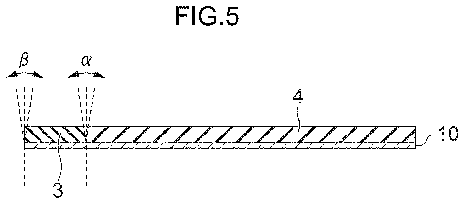

By cutting off the inclined faces of the insulating layer 3 and the solid electrolyte layer 4 caused by coating run, the region that can be utilized as the solid electrolyte layer 4 can be designed wide, and battery performance can be improved. Furthermore, by cutting off the inclined face of the insulating layer 3 caused by coating run, the mechanical strength of the end portion of the insulating layer 3 on the positive electrode current collector tab-side end portion 1A side can be improved. Specifically, as shown in FIG. 5, an angle of inclination α of the end face of the solid electrolyte layer 4 contiguous with the insulating layer 3 and an angle of inclination β of the end face of the insulating layer 3 opposite from the end face contiguous with the solid electrolyte layer 4 are preferably in the range of ±10°, and more preferably in the range of ±5°, relative to the layered direction X in the cross-sectional view. By setting the angle of inclination α and the angle of inclination β in this range, the region that can be utilized as the solid electrolyte layer 4 can be designed wide, and battery performance can be improved.

Thereafter, the negative electrode layer 5 is formed on the insulating layer 3 and the solid electrolyte layer 4 such that its end portion overlies the insulating layer 3. Then, the carbon coating layer 6 in the laminate comprising the negative electrode current collector 7 and the carbon coating layer 6 is adhered to the negative electrode layer 5. Because of this, the carbon coating layer 6 and the negative electrode current collector 7 can be formed on the negative electrode layer 5.

According to the solid-state battery manufacturing method of this disclosure, the insulating layers 3 and the solid electrolyte layers 4 are disposed such that the end portions of the insulating layers 3 opposite from the end portions contiguous with the solid electrolyte layers 4 overlie the positive electrode layers 2. According to the solid-state battery manufacturing method of this disclosure, even if pressure is applied in the layered direction of the positive electrode current collector 1, the positive electrode layers 2, and the solid electrolyte layers 4, the insulating layers 3 can protect the solid electrolyte layers 4 and can prevent damage to the solid electrolyte layers 4 and particularly damage to the areas near the end faces of the solid electrolyte layers 4. Furthermore, according to the solid-state battery manufacturing method of this disclosure, it suffices for the negative electrode layers 5 to be disposed after the positive electrode layers 2 have been densified, so a large pressure can be kept from being applied in the layered direction X to the negative electrode layers 5.

### <Other Embodiment 1>

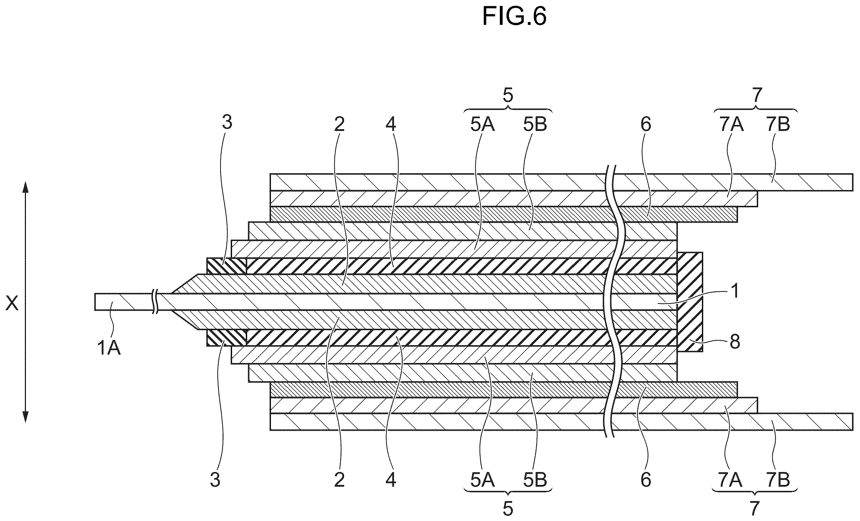

The solid-state battery of this disclosure is not limited to the configuration shown in FIG. 1 and may also have a configuration that does not have the adhesive layers 9 between the positive electrode current collector 1 and the positive electrode layers 2. That is, as shown in FIG. 6, the solid-state battery may have a configuration where the positive electrode layer 2 is disposed on at least one main face of the positive electrode current collector 1. In this case, the positive electrode layer 2 is formed by coating a positive electrode slurry including a positive electrode active material on at least one main face of the positive electrode current collector 1 and drying it. At this time, the peripheral edge portion of the positive electrode layer 2 becomes an inclined face due to coating run of the positive electrode slurry. In the followings, the same members as those in the above embodiment are designated by the same reference numerals, and detailed description thereof will be omitted herein.

Thereafter, the insulating layer 3 and the solid electrolyte layer 4 are disposed on the positive electrode layer 2 by the method shown in FIG. 4A to FIG. 4D, and the negative electrode layer 5, the carbon coating layer 6, and the negative electrode layer 7 are disposed, whereby the solid-state battery shown in FIG. 6 can be made. Also in the solid-state battery shown in FIG. 6, the end portion of the insulating layer 3 disposed on the positive electrode layer 2 opposite from the end portion contiguous with the solid electrolyte layer 4 is in a position overlying the positive electrode layer 2. Because of this, even if pressure is applied in the layered direction X to the solid-state battery, the insulating layer 3 can protect the solid electrolyte layer 4 and prevent damage to the solid electrolyte layer 4 and particularly damage to the areas near the end faces of the solid electrolyte layer 4. If the solid electrolyte layer were to sustain damage, it is conceivable that battery performance would deteriorate due to the problem of cracks further progressing from the damaged portion and the problem of lithium precipitating due to nonuniform reactions in the damaged portion. According to the solid-state battery shown in FIG. 6, the occurrence of these problems can be inhibited, and excellent battery performance can be maintained.

Furthermore, also in the solid-state battery shown in FIG. 6, a positive electrode including the positive electrode current collector 1 and the positive electrode layers 2 is located near the center of the electrode laminate in the layered direction X, and negative electrodes including the negative electrode current collectors 7 and the negative electrode layers 5 are located on outer layer sides of the electrode laminate in the layered direction X. In the solid-state battery configured in this way, the positive electrode layers 2 can be densified by first disposing the positive electrode layers 2 on the main faces of the positive electrode current collector 1 and then compressing them in the layered direction. Thereafter, the insulating layers 3 and solid electrolyte layers 4 and the negative electrode layers 5 are sequentially disposed on the positive electrode layers 2. That is, when manufacturing the solid-state battery, it suffices for the negative electrode layers 5 to be disposed after the positive electrode layers 2 have been densified, so a large pressure can be kept from being applied in the layered direction X to the negative electrode layers 5.

### <Battery Types and Applications>

The type of the solid-state battery is not particularly limited and is typically a lithium-ion battery. Furthermore, the solid-state battery of this disclosure may be a primary battery or a secondary battery but among these is preferably a secondary battery. This is because a secondary battery can be repeatedly charged and discharged and is useful as an automotive battery for example. The solid-state battery may be a semi-solid-state battery such as one having a gel layer including an electrolyte solution and a polymer between an electrode and a solid electrolyte layer or may be an all-solid-state battery using a solid electrolyte as the electrolyte. The solid electrolyte may include less than 10% by mass of an electrolyte solution relative to the total amount of the electrolyte. The solid-state battery is preferably an all-solid-state battery.

The applications of the battery of this disclosure are not particularly limited. Examples of representative applications include being a power source for vehicles, electronic devices, and electrical storage systems. The battery may be used as a power source for moving bodies other than vehicles (e.g., trains, ships, and aircraft) and may be used as a power source for electrical products such as information processing devices. Among these, the application of the battery of this disclosure is preferably as a power source for vehicles and preferably as a power source for driving hybrid electric vehicles, plug-in hybrid electric vehicles, or battery electric vehicles.

Examples of vehicles include four-wheeled electric vehicles, two-wheeled electric vehicles, gasoline automobiles, and diesel automobiles. Examples of four-wheeled electric vehicles include battery electric vehicles (BEV), plug-in hybrid electric vehicles (PHEV), and hybrid electric vehicles (HEV). Examples of two-wheeled electric vehicles include electric bikes and pedal-assist electric bicycles.

## Claims

1. A solid-state battery, comprising:
a positive electrode current collector (1);
a positive electrode layer (2) disposed on at least one main face of the positive electrode current collector (1); and
a solid electrolyte layer (4) that is disposed on the positive electrode layer (2) and an insulating layer (3) that is contiguous with an end portion of the solid electrolyte layer (4),
wherein an end portion of the insulating layer (3) at an opposite side from the end portion that is contiguous with the solid electrolyte layer (4) is in a position overlying the positive electrode layer (2).

2. The solid-state battery of claim 1, further comprising a negative electrode layer (5) disposed on the solid electrolyte layer (2) and the insulating layer (3), wherein an end portion of the negative electrode layer (5) is in a position overlying the insulating layer (3).

3. The solid-state battery of claim 1 or 2, wherein the positive electrode current collector (1) comprises a positive electrode current collector tab-side end portion (1A) connected to a positive electrode current collector tab, and the insulating layer (3) and the solid electrolyte layer (4) are disposed on the positive electrode layer (2) in this order from the positive electrode current collector tab-side end portion (1A).

4. The solid-state battery of any one of claims 1 to 3, comprising an adhesive layer (9) between the positive electrode current collector (1) and the positive electrode layer (2).

5. The solid-state battery of claim 4, wherein the adhesive layer (9) is conductive.

6. The solid-state battery of claim 4, wherein the adhesive layer (9) has a thickness of 0.5 µm to 1.5 µm.

7. The solid-state battery of any one of claims 1 to 6, wherein an angle of inclination of an end face of the solid electrolyte layer (4) that contiguous with the insulating layer (3), and an angle of inclination of an end face of the insulating layer (3) at an opposite side from an end face that is contiguous with the solid electrolyte layer (4), in a cross-sectional view along a layering direction of the positive electrode current collector (1), the positive electrode layer (2), and the solid electrolyte layer (4) and the insulating layer (3), are in a range of ±10° relative to the layering direction.

8. A method of manufacturing a solid-state battery, the method comprising:
forming a positive electrode layer (2) on at least one main face of a positive electrode current collector (1); and
forming, on the positive electrode layer (2), a solid electrolyte layer (4) and an insulating layer (3) that is contiguous with an end portion of the solid electrolyte layer (4),
wherein an end portion of the insulating layer (3) at an opposite side from the end portion that is contiguous with the solid electrolyte layer (4) is disposed in a position overlying the positive electrode layer (2).

9. The method of manufacturing a solid-state battery of claim 8, further comprising forming a negative electrode layer (5) such that an end portion of the negative electrode layer (5) overlies the insulating layer (3).

10. The method of manufacturing a solid-state battery of claim 8 or 9, wherein, in the forming the positive electrode layer (2), an adhesive layer (9) is formed on the at least one main face of the positive electrode current collector (1), and the positive electrode layer (2), which has been formed on a transfer member, is transferred to the adhesive layer (9).

11. The method of manufacturing a solid-state battery of claim 10, wherein the adhesive layer (9) is conductive.

12. The method of manufacturing a solid-state battery of claim 10, wherein the adhesive layer (9) has a thickness of 0.5 µm to 1.5 µm.

13. The method of manufacturing a solid-state battery of claim 10, wherein a positive electrode slurry comprising a positive electrode active material is coated on the transfer member, and thereafter, an inclined face of a peripheral edge portion of the coated positive electrode slurry is cut off.

14. The method of manufacturing a solid-state battery of any one of claims 8 to 13, wherein an angle of inclination of an end face of the solid electrolyte layer (4) that is contiguous with the insulating layer (3), and an angle of inclination of an end face of the insulating layer (3) at an opposite side from an end face that is contiguous with the solid electrolyte layer (4), in a cross-sectional view along a layering direction of the positive electrode current collector (1), the positive electrode layer (2), and the solid electrolyte layer (4) and the insulating layer (3), are in a range of ± 10° relative to the layering direction.
